# EUROPÄISCHE PATENTSCHRIFT

(11) **EP 3 262 925 B1**
(45) Veröffentlichungstag und Bekanntmachung des Hinweises auf die Patenterteilung: **02.09.2020**
(21) Anmeldenummer: 17162780.5
(22) Anmeldetag: 24.03.2017
(51) Int. Cl.: A01G 9/02

(54) **PFLANZSÄULE**
PLANT COLUMN
COLONNE VERTE

(30) Priorität: 27.06.2016 CH 8132016
(43) Veröffentlichungstag der Anmeldung: 03.01.2018
(73) Patentinhaber: Schrämmli Landschaftsarchitektur GmbH, 5200 Brugg (CH)
(72) Erfinder: SCHRÄMMLI, Stefan, 5200 Brugg (CH)
(74) Vertreter: Schneider Feldmann AG Patent- und Markenanwälte

(56) Entgegenhaltungen:
- WO-A1-2011/019555
- WO-A1-2015/197889
- WO-A1-2016/010795
- FR-A1- 2 955 736
- US-A1- 2010 132 255
- US-B1- 6 470 625

## Beschreibung

### Technisches Gebiet

Die vorliegende Erfindung beschreibt eine Pflanzsäule mit mindestens einem rohrförmigen Säulensegment, wobei jedes Säulensegment wasserdicht abgeschlossen ist indem das bodennächste Säulensegment einseitig an einem Bodenstück befestigt ist und mittels Bodenstück am Boden befestigbar ist und zwischen in Längsrichtung benachbarten Säulensegmenten mindestens ein Zwischenstück zur wasserdichten Befestigung benachbarter Säulensegmente angeordnet ist,
und wobei die Säulensegmente, das Bodenstück und das Zwischenstück derart zusammensteckbar verbindbar ausgestaltet sind, dass ein Steigrohr und ein Entwässerungsrohr durch die gesamte Pflanzsäule in Längsrichtung verlaufend zur Zu- bzw. Ableitung von Wasser ausbildbar anordbar ist, womit jedes Säulensegment einen eigenen Wasserkreislauf umfasst

### Stand der Technik

Pflanzsäulen sind im Bereich der dekorativen- und Nutzbepflanzung bekannt. Vornehmlich werden hierfür im Bereich des Salatanbaus vertikal aufgestellte Röhren, bevorzugt aus Kunststoffmaterial verwendet, in die unregelmässig oder regelmässig Ausnehmungen angeordnet sind, aus denen der Salat wächst. Diese Röhren werden entweder direkt in das Erdreich eingebracht oder in einen geeigneten Blumentopf eingebracht.

Es sind durchgehende, säulenförmige bzw. rohrförmige Pflanzgefässe bekannt, die in der Höhe einteilig ausgeführt und ununterbrochen und somit ausschliesslich mit fest vorgegebener Höhe ausgebildet sind.

Des weiteren sind Pflanzgefässe bekannt, die einzeln übereinander zu einer Pflanzsäule gestapelt sind, wobei jedes Pflanzgefäss Seitenwände aufweist, die sich nach unten kontinuierlich verjüngen, so dass dann, wenn die Pflanzgefässe übereinander angeordnet sind, zwischen dem Bodenabschnitt des oberen Einzelgefässes und der Deckseite des darunter befindlichen Pflanzgefässes ein umlaufender Rand entsteht, der zur Bepflanzung genutzt werden kann. Die Querschnittsform der Pflanzgefässe kann dabei quadratisch oder kreisförmig ausgeführt sein. Des Weiteren gibt es aus Einzeltöpfen zu einer Pflanzsäule zusammensetzbare Einzelgefässe, die in ihrer Umfangsfläche gebaucht ausgeführt sind und deren Boden einen Querschnitt hat, der der Öffnung des Gefässes entspricht, so dass das obere Einzelgefäss mit dem Boden in die Öffnung des darunterliegenden Einzelgefässes einsetzbar ist.

Aus der EP0098474 ist eine schwierig herstellbare, verschachtelte Pflanzsäule bekannt, als Einrichtung zur Haltung von Pflanzen in überdachten Räumen für Großraumbüros, Restaurants, Banken oder dergleichen.

Aus der US6470625 ist eine Pflanzsäule mit einem rohrförmigen Säulensegment bekannt, welche zusammensteckbar gestaltet ist und ein Steigrohr und ein Entwässerungsrohr durch die gesamte Pflanzsäule führend aufweist. Aus der WO2015/197889 A1 ist eine Pflanzsäule gemäß dem Oberbegriff des Anspruchs 1 bekannt.

### Darstellung der Erfindung

Die vorliegende Erfindung hat sich zur Aufgabe gestellt eine Pflanzsäule zu schaffen, welche Säulensegmente umfasst, einfach herstellbar und einfach erweiterbar ist, wobei Pflanzen verschiedener Säulensegmente unbeeinflusst voneinander wachsen und gedeihen können.

Dies wird durch eine Pflanzsäule mit den Merkmalen des kennzeichnenden Teils des Anspruchs 1 erreicht.

Die Säulensegmente sind flüssigkeitsdicht ausgestaltet, wobei ein Flüssigkeitszufuhr und eine Entwässerung kontrolliert separat für jedes Säulensegment vorgesehen ist.

Substrat und Pflanzen benachbarter Säulensegmente sind voneinander getrennt gelagert und jedes Säulensegment wird an voneinander unabhängigen Wasserkreisläufen betrieben.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1a: zeigt eine perspektivische Ansicht einer Pflanzsäule mit einem Bodenstück und einem Säulensegment, während
- Figur 1b: eine Aufsicht auf das Bodenstück der Pflanzsäule zeigt.
- Figur 1c: zeigt einen Längsschnitt durch ein im Boden befestigtes Bodenstück.
- Figur 2a: zeigt eine perspektivische Ansicht eines Säulensegmentes in aufgestelltem Zustand, während
- Figur 2b: eine Ansicht eines plan hingelegten Säulensegmentes zeigt.
- Figur 3a: zeigt einen Längsschnitt durch eine Pflanzsäule mit einem Säulensegment, welches auf einem Bodenstück befestigt ist, während
- Figur 3b: eine Pflanzsäule mit drei Säulensegmenten auf einem Bodenstück befestigt in einer perspektivischen Ansicht zeigt.
- Figur 4a: zeigt eine Schnittansicht eines Überganges zwischen einem Säulensegment einem Zwischenstück und einem zweiten Säulensegment, während
- Figur 4b: eine Aufsicht auf ein Zwischenstück zeigt.
- Figur 5a: zeigt eine geschnittene Explosionsansicht einer Pflanzsäule mit drei Säulensegmenten, während
- Figur 5b: eine perspektivische Explosionsdarstellung zweier durch ein Zwischenstück verbindbare Säulensegmente zeigt.

### Beschreibung

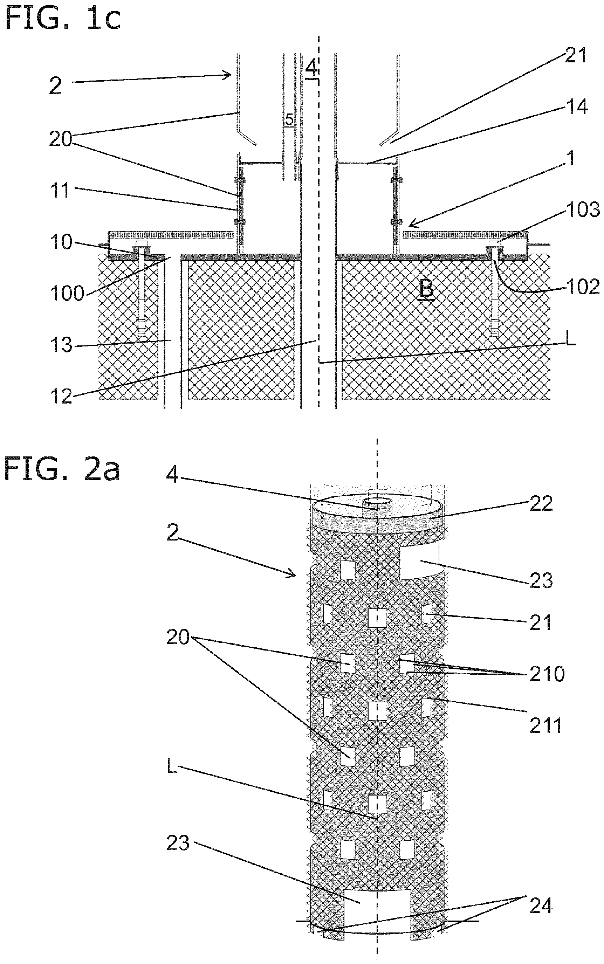

Die Pflanzsäule 0 umfasst ein Bodenstück 1 und mindestens ein Säulensegment 2, welches mittels Bodenstück 1 an einem Boden B befestigt ist. Mehrere Säulensegmente 2 können miteinander durch die Anordnung von Zwischenstücken 3 (z.B. in Figur 2c dargestellt) verbunden werden. Die Zwischenstücke 3 dienen zum Abschluss der Säulensegmente 2 und erleichtern die Verbindung mehrerer Säulensegmente 2 miteinander. Durch die Zwischenstücke 3 bzw. das Bodenstück 1 kann eine flüssigkeits- bzw. wasserdichte Verbindung mehrerer Säulensegmente 2 miteinander bzw. mit dem Bodenstück 1 und/oder mindestens einem Zwischenstück 3 geschaffen werden. Sämtliche Bauteile der Pflanzsäule 0 sind aus Metall bzw. Metallblech hergestellt, wobei rostfreier Stahl eine ansprechende ästhetische Gestalt und sich widerstandsfähig gegenüber Düngerwasser zeigt.

Das Bodenstück 1 umfasst eine Bodenplatte 10, ein Bodenstückrohr 11, einen Steigrohrstutzen 12 und einen Entwässerungsrohrstutzen 13.

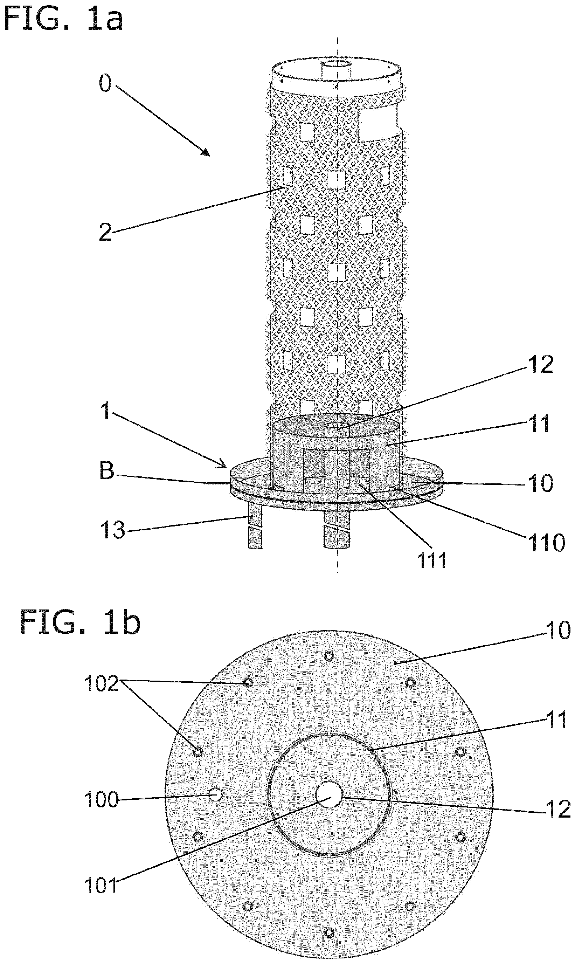

In der Bodenplatte 10 ist eine Entwässerungsöffnung 100, eine Steigrohröffnung 101 und eine Mehrzahl von Bohrlöchern 102 zur Befestigung angeordnet. Im Bereich der Bohrlöcher 102 kann ein Ring angeschweisst als Distanzhalter angeordnet sein. Wie in Figur 1a erkennbar, umfasst das Bodenstückrohr 11 mindestens eine Bodenentwässerungsöffnung 110 und mindestens eine Serviceöffnung 111. Flüssigkeit ist durch die Steigrohröffnung 101 und den Steigrohrstutzen 12 mit daran angeschlossenen Rohren durch das Bodenstück 1 in benachbarte Säulensegmente 2 bringbar. Flüssigkeit kann über die Bodenplatte 10 über die Entwässerungsöffnung 100 und den Entwässerungsrohrstutzen 13 aus mindestens einem dem Bodenstück 1 benachbarten Säulensegment 2 abfliessen.

Wie auch in Figur 1c erkennbar, bildet die Bodenplatte 10 eine wannenartige Gestalt, da eine endseitige Stirnfläche in Form eines Abschlussringes, die Bodenplatte 10 umlaufend, angeordnet ist. Flüssigkeit wird entsprechend auf der Bodenplatte 10 gehalten und läuft nur durch den Entwässerungsrohrstutzen 13 ab. Durch den Entwässerungsrohrstutzen 13 kann das Wasser direkt in die Kanalisation geleitet werden. Auf die am Boden B mittels Befestigungsmitteln 103 die Bohrlöcher 102 querend, befestigte Bodenplatte 10 ist das Säulensegment 2 aufgestülpt gelagert. In Figur 1c sind die Ringe als Distanzhalter die Bohrlöcher 102 umgebend erkennbar.

Das Säulensegment 2 wird von einer Wand 20 gebildet, in welcher eine Mehrzahl von Pflanzöffnungen 21 angeordnet ist. Wie noch gezeigt wird, sind die Pflanzöffnungen 21 durch mehrere Fräskanten und eine Biegekante in der Wand 20 des Säulensegmentes 2 eingeformt gebildet. Im aufgerollten Zustand bildet das Säulensegment 2 einen Hohlzylinder, in welchem ein Steigrohr 4 und ein Entwässerungsrohr 5 in Längsrichtung L querend verlaufen. Das Steigrohr 4 und das Entwässerungsrohr 5 werden mit dem Bodenstück 1 bzw. dem Zwischenstück 3 zwischen benachbarten Säulensegmenten 2 verbunden. Damit weist jedes Säulensegment 2 einen eigenen Wasserkreislauf auf. Das Steigrohr 4 ist hier zentrisch durch das Säulensegment 2 verlaufend angeordnet und das Entwässerungsrohr 5 leicht vom Zentrum versetzt. Damit kein Substrat aus dem Inneren des Säulensegmentes 2 in das Bodenstück gelangen kann, sondern nur Flüssigkeit abfliessen kann, ist ein Lochblech 14 zwischen Säulensegment 2 und dem Bodenstückrohr 11 angeordnet. Das Lochblech 14 wird dabei in einer Ebene senkrecht zur Längsachse L des Säulensegmentes 2 angeordnet.

Das zylindrisch geformte Säulensegment 2 weist in seiner Wand 20 mindestens eine Serviceöffnung 23 und eine Mehrzahl von Befestigungslöchern 22 auf. Die Pflanzöffnungen 21 sind hier durch jeweils drei Fräskanten 210 und eine Biegekante 211 gebildet. Nach dem fräsen der drei Fräskanten 210 kann das Blech der Wand 20 um die Biegekante 211 nach hinten in den Zylinderraum hinein gebogen werden. Im unteren Bereich der Wand 20, welche dem Bodenstück 1 oder einem unterhalb angeordneten Säulensegment 2 zugewandt ist, ist mindestens eine Entwässerungsaussparung 24 des Säulensegmentes 2 angeordnet. Daraus kann Flüssigkeit aus dem Säulensegment 2 in das wannenartige Bodenstück 1 oder das wannenartige Zwischenstück 3 fliessen.

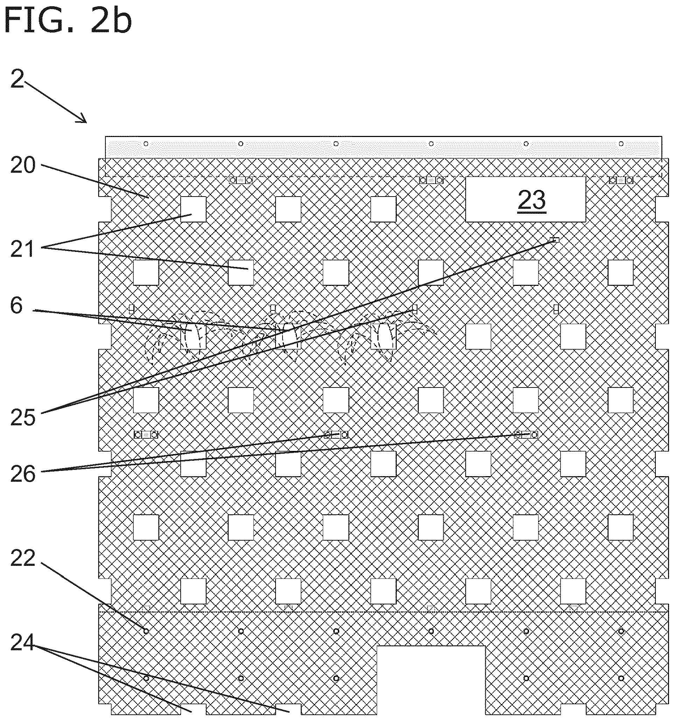

Das Säulensegment 2 wird aus einem Blech gerollt oder extrudiert. Ein planes Blech ist in Figur 2b vor dem Aufrollprozess dargestellt. Oben ist an der Wand 20 ein Verbindungsstück befestigt, damit ein Anschluss an ein nicht gezeigtes Zwischenstück 3 erfolgen kann. Pflanzen 6 sind strichliniert in einigen Pflanzöffnungen 21 schematisch angedeutet. Neben einer Serviceöffnung 23 und Entwässerungsaussparungen 24 im unteren Bereich der Wand 20 sind auf der Innenwandfläche der Wand 20 mehrere Befestigungsschellen 25 und mehrere Rohrschellen 26 angeordnet. Die Befestigungsschellen 25 können selbstklebend ausgestaltet sein und dienen zur Befestigung von Elektrokabeln, welche durch das Innere des Säulensegments 2 geführt werden. Die Rohrschellen 26 werden zur Befestigung eines Beleuchtungsmoduls und damit zum Halten der Verkabelung oder direkt der Beleuchtungskörper eingesetzt.

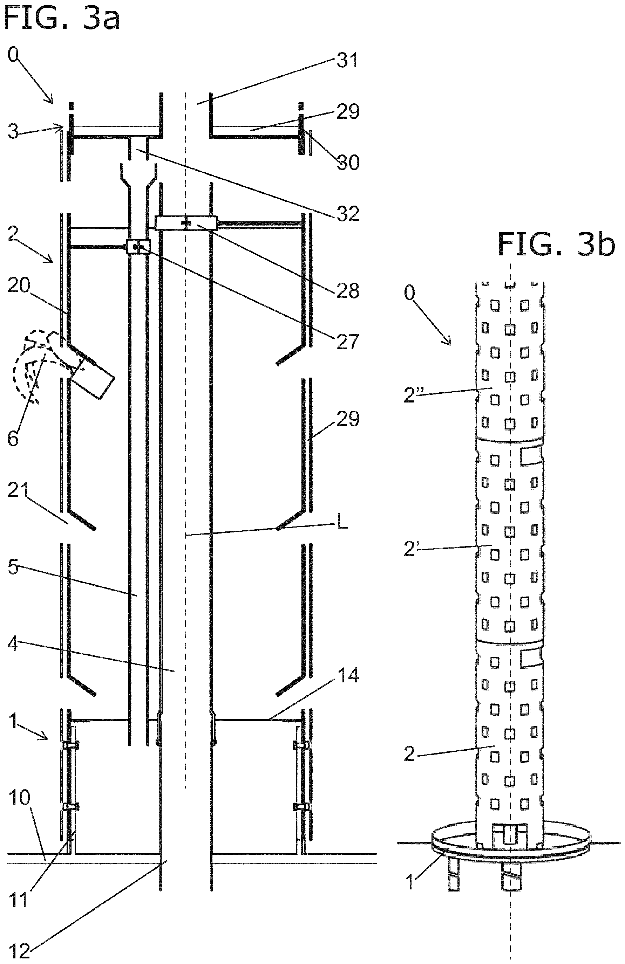

Figur 3a zeigt eine Pflanzsäule 0, wobei auf einem Bodenstück 1 ein erstes Säulensegment 2 angeordnet ist, auf dessen dem Bodenstück 1 abgewandten Ende ein Zwischenstück 3 angeordnet ist. An einer Entwässerungsrohrschelle 27 und an einer Steigrohrschelle 28 sind jeweils ein Entwässerungsrohr 5 und ein Steigrohr 4 am Säulensegment 2 befestigt. Steigrohr 4 und Entwässerungsrohr 5 sind bevorzugt aus PE-HD hergestellt. Am bodenseitigen Ende des Säulensegmentes 2 führen Steigrohr 4 und Entwässerungsrohr 5 durch das Lochblech 14 in das Bodenstückrohr 11. Das Steigrohr 4 kann durch den Steigrohrstutzen 12 im Bodenstück 1 mit Flüssigkeit beaufschlagt werden, sodass durch entsprechende Öffnungen im Steigrohr 4 ein nicht gezeigtes Substrat im Innenraum des Säulensegments 2 bewässert werden kann. Das Säulensegment 2 ist bodenseitig am Bodenstück 1 festgeschraubt. An der vom Boden abgewandten Seite des Säulensegmentes 2 ist das Zwischenstück 3 angeschweisst.

Das Zwischenstück 3 ist ebenfalls wannenartig ausgestaltet mit einem Zwischenstückrohr 30, welches einen Ring um eine Platte des Zwischenstücks 3 bildet. Das Zwischenstück 3 weist einen Zwischenstücksteigrohrstutzen 31 und einen Zwischenstückentwässerungsrohrstutzen 32 von der Platte ausgehen auf. Auf einer Ebene des Zwischenstücks 3 kann eine Drainagematte bzw. -platte 29 platziert sein. Eine solche Drainagematte 29 kann auch die Säulensegmente 2 umgebend angeordnet sein. Bevorzugt wird Enkamat Nylongewebe verwendet, welches mit Klammern an den Säulensegmenten 2 und/oder am Zwischenstück 3 und/oder dem Bodenstück 1 befestigt werden kann.

Das Steigrohr 4 wird am Bodenstück 1 am Steigrohrstutzen 12 und am Zwischenstück 3 mit dem Zwischenstücksteigrohrstutzen 31 und das Entwässerungsrohr 5 am Bodenstück 1am Entwässerungsrohrstutzen 13 und am Zwischenstück 3 mit dem Zwischenstückentwässerungsrohrstutzen 32 befestigt. Da die Zwischenstücke 3 den Innenraum benachbarter Säulensegmente 2 abdichten, kann Flüssigkeit nur durch die Rohre 4, 5 und die wannenartigen Zwischenstücke 3 bzw. das wannenartige Bodenstück 1 entweichen. Weder Substrat noch Flüssigkeit kann damit zwischen den Säulensegmenten 2 ausgetauscht werden.
In Figur 3b ist eine Pflanzsäule 0 mit drei Säulensegmenten 2, 2', 2" gezeigt, wobei das unterste Säulensegment 2 direkt am Bodenstück 1 befestigt ist. Zwischen benachbarten Säulensegmenten 2, 2', 2" sind Zwischenstücke 3 eingesteckt und dort verschraubt oder verschweisst, die nicht sichtbar sind. Die Zwischenstücke 3 werden üblicherweise an den Säulensegmenten 2, 2', 2" angeschweisst.

Das Zwischenstück 3 ist analog zum Bodenstück 1 wannenartig ausgestaltet und weist ein Zwischenstückrohr 30, einen Zwischenstücksteigrohrstutzen 31 und einen Zwischenstückentwässerungsrohrstutzen 32 auf. Im Zwischenstückrohr 30 sind mindestens eine Entwässerungsöffnung 320 und mindestens eine Serviceöffnung ausgespart. Das Zwischenstück 3 weist bevorzugt eine Stahlwanne 33 auf. Das oberhalb des Zwischenstücks 3 angeordnete Säulensegment 2 ist hier angeschraubt verbunden und ist mit einem Lochblech 14 zum Zwischenstück 3 hin abgeschlossen, sodass kein Substrat in das Zwischenstück 3 gelangt. Hier ist das wannenartige Zwischenstück 3 mit einer Drainagematte 29 ausgelegt. Das Steigrohr 4 und das Entwässerungsrohr 5 des Säulensegmentes 2 führen in das wannenartige Zwischenstück 3. Das Zwischenstück 3 ist unterhalb mit einem zweiten Säulensegment 2' verbunden, welches gestrichelt angedeutet ist.

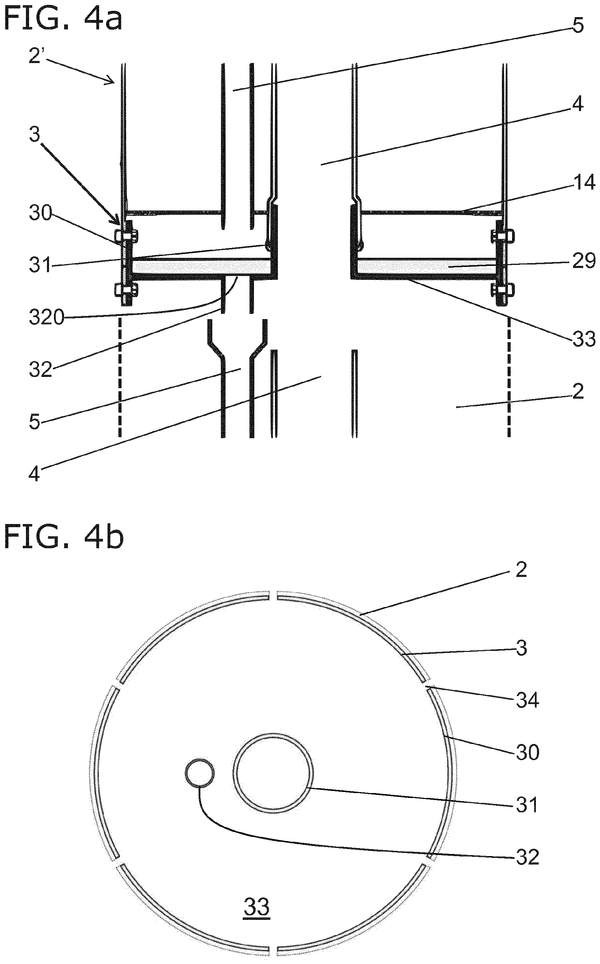

In der Aufsicht auf ein Zwischenstück 3 gemäss Figur 4b ist auch das obere Säulensegment 2 gestrichelt angedeutet. Es ist eine Mehrzahl von Bohrlöchern 34 auf dem Umfang des Zwischenstückrohres 30 verteilt, welche auf Bohrungen im Säulensegment 2 abgestimmt sind und zur Befestigung dienen können.

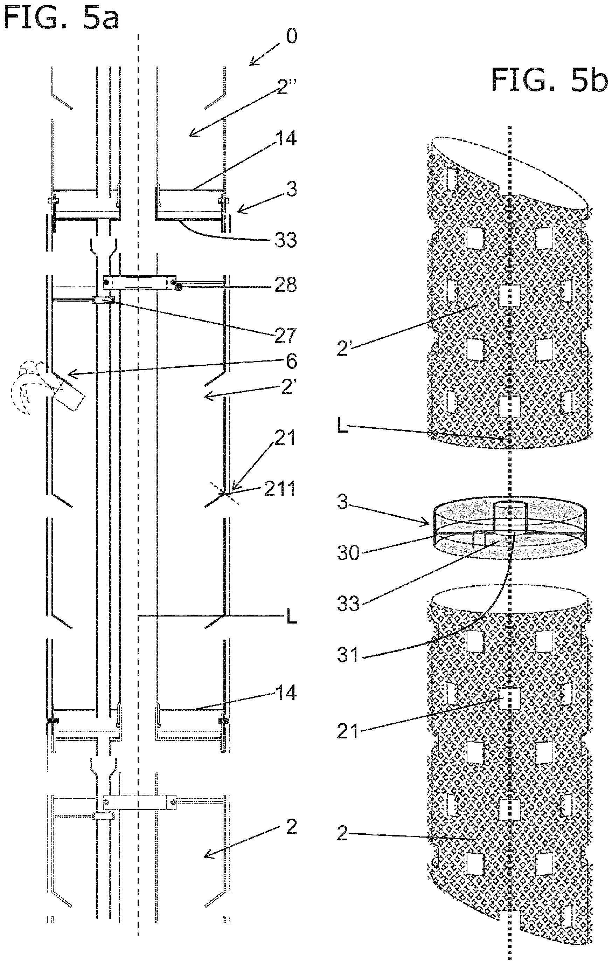

Figur 5a zeigt eine Pflanzsäule 0 mit drei Säulensegmenten 2, 2', 2", welche durch zwei Zwischenstücke 3 verbunden teilweise dargestellt sind. Im unteren Bereich jedes Säulensegmentes 2, 2', 2" sind Lochbleche 14 angeordnet. Das Lochblech 14 wird bevorzugt mit einer Lochgrösse von 3 mm und einem Lochanteil von mehr als 30% ausgeführt. Das Lochblech 14 ist jeweils an Winkeln angeschweisst, welche ebenfalls aus rostfreiem Stahl gefertigt sind und an der Innenwand des Säulensegmentes 2 befestigt sind.

Die Steigrohre 4 und Entwässerungsrohre 5 sind mittels der Steigrohrschelle 28 und der Entwässerungsrohrschelle 27 im Innenraum jedes Säulensegmentes 2, 2', 2" befestigt. Die Positionierung der Steigrohre 4 und Entwässerungsrohre 5 ist auf die Position der Zwischenstücke 3 bzw. auf Zwischenstücksteigrohrstutzen 31 und Zwischenstückentwässerungsrohrstutzen 32 abgestimmt. Damit lassen sich die Säulensegmente 2, 2', 2" in die Zwischenstücke 3 einstecken, wobei die Rohrstutzen ineinandergesteckt werden.

Wie hier nochmals gezeigt, sind Pflanzöffnungen 21 in den Säulensegmenten 2, 2', 2" angeordnet, wobei das Material jeder Pflanzöffnung 21 auf drei Seiten aufgeschnitten (3 Fräskanten 210) und in das Säulensegment 2 um die Biegekante 211 hineingebogen ist. Die Biegekante 211 verläuft dabei senkrecht zur Längsachse L.

Die Bauteile der Pflanzsäule 0 sind bevorzugt aus Chromstahl bzw-Chromstahlröhren gebildet, die mittels Verschraubung befestigt aufeinander gestellt werden können. Jedes Säulensegment 2 besteht aus einer Röhre mit Pflanzöffnungen 21, einer Steigzone bzw. Steigrohr 4 für Wasser und Stromanschluss, einer Entwässerungsleitung bzw. Entwässerungsrohr 5 und ist an dem Ziwschenstück 3 bzw. Bodenstück 1 in Form einer wasserdichten Wanne 10, 33 als Rohrabschluss befestigt.

Durch diese Unterteilung entstehen voneinander unabhängige Pflanzsysteme, die unterschiedlich bewässert und bepflanzt werden können.

Das Säulensegment 2 in Form einer Röhre dient als konstruktives Element und gleichzeitig als Träger der Pflanzen 6 und des Pflanzsubstrats. Eine Trennung zwischen tragender Konstruktion und Pflanzung ist nicht vorhanden.

Die Bewässerung erfolgt innerhalb des Säulensegments 2. Somit wird verhindert, dass Giesswasser unkontrolliert auf der Aussenseite des Säulensegments 2 herunterfliesst und auf den Boden tropft.

Durch die in das röhrenförmige Säulensegment 2 hineingebogenen Rohrteile der Pflanzöffnungen 21 wird ein Herausrieseln des Pflanzsubstrats verhindert. Gleichzeitig ist das Auswechseln von Pflanzen 6 ohne ein Nachrutschen des Substrats möglich.

Da jedes Säulensegment 2, 2', 2" einen separaten Wasserkreislauf besitzt, wird ein Übertragen von Krankheitskeimen durch das Wasser von einem Säulensegment 2, 2', 2" auf das untenstehende verhindert.

Durch die voneinander unabhängigen Säulensegmente 2, 2', 2" ist ein Auswechseln einzelner Säulensegmente 2, 2', 2" ohne Probleme möglich. Die Zwischenstücke 3 in Form der wasserdichten Wanne dienen als Verbindungselement zwischen den einzelnen Säulensegmenten 2, 2', 2".

Die Säulensegmente 2, 2', 2" können vor der Montage auf der Baustelle bepflanzt werden und bilden von Beginn weg eine begrünte Pflanzsäule 0.

Die Säulensegmente 2, 2', 2" und damit die gesamte Pflanzsäule 0 querend sind elektrische Versorgungsleitungen, bevorzugt an der Wand des Säulensegmentes 2, 2', 2" anordbar. Die Verbindung der elektrische Versorgungsleitungen, wie auch des Steigrohres 4 und/oder des Entwässerungsrohres 5 kann durch eine Klebeverbindung oder beispielsweise eine Schelle verschraubt gelöst sein.

Optional ist ein Beleuchtungsmodul an einem Säulensegment 2, 2', 2" der Pflanzsäule 0 angeordnet.

Die hier vorgestellte Pflanzsäule 0 umfasst einfach herstellbare rohrförmige Säulensegmente 2, 2', 2", welche in ebenfalls einfach herstellbare wannenartige Bodenstücke 1 bzw. Zwischenstücke 3 einsetzbar sind, sodass eine einfach erweiterbare Pflanzsäule 0 herstellbar ist. Die Anordnung der Pflanzöffnungen 21 und die Einbringung von Steigrohr 4 und Entwässerungsrohr 5 sind ebenfalls einfach möglich.

An der Aussenseite der Säulensegmente 2, 2', 2" ist erfindungsgemäss eine Drainagematte bzw. Platte vorgesehen. Diese können aus Geokunststoff, insbesondere Enkamat hergestellt sein. Bevorzugt sind auch Drainageplatten 29 in den Zwischenstücken 3 und/oder Bodenstücken 1 vorgesehen, welche aus einem geeigneten Geokunststoff, insbesondere aus Enkamat hergestellt sind.

### Bezugszeichenliste

- 0: Pflanzsäule
- 1: Bodenstück
10 Bodenplatte
100 Entwässerungsöffnung
101 Steigrohröffnung
102 Bohrlöcher
103 Befestigungsmittel
11 Bodenstückrohr
110 Bodenentwässerungsöffnung
111 Serviceöffnung
12 Steigrohrstutzen
13 Entwässerungsrohrstutzen
14 Lochblech
- 2: Säulensegment
20 Wand
21 Pflanzöffnung
210 Fräskante
211 Biegekante
22 Befestigungslöcher
23 Serviceöffnung
24 Entwässerungsaussparung
25 Befestigungsschelle
26 Rohrschelle
27 Entwässerungsrohrschelle
28 Steigrohrschelle
29 Drainagematte bzw. -platte (z.B. Enkamat)
- 3: Zwischenstück (wannenartig, Platte mit Ring=Zwischenstückrohr)
30 Zwischenstückrohr
301 Serviceöffnung
31 Zwischenstücksteigrohrstutzen
32 Zwischenstückentwässerungsrohrstutzen
320 Entwässerungsöffnung
33 Stahlwanne
34 Bohrloch
- 4: Steigrohr
- 5: Entwässerungsrohr
- 6: Pflanze
- B: Boden
- L: Längsachse

## Patentansprüche

1. Pflanzsäule (0) mit mindestens einem rohrförmigen Säulensegment (2) mit einer Wand (20), umfassend eine Mehrzahl von Pflanzöffnungen (21), wobei jedes Säulensegment (2) wasserdicht abgeschlossen ist indem das bodennächste Säulensegment (2) einseitig an einem Bodenstück (1) befestigt ist und mittels Bodenstück (1) am Boden (B) befestigbar ist und zwischen in Längsrichtung (L) benachbarten Säulensegmenten (2, 2') mindestens ein Zwischenstück (3) zur wasserdichten Befestigung benachbarter Säulensegmente (2, 2') angeordnet ist,
und wobei die Säulensegmente (2, 2'), das Bodenstück (1) und das Zwischenstück (3) derart zusammensteckbar verbindbar ausgestaltet sind, dass ein Steigrohr (4) und ein Entwässerungsrohr (5) durch die gesamte Pflanzsäule (0) in Längsrichtung (L) verlaufend zur Zu- bzw. Ableitung von Wasser ausbildbar anordbar ist, womit jedes Säulensegment (2, 2') einen eigenen Wasserkreislauf umfasst, **dadurch gekennzeichnet, dass** die Aussenfläche des Säulensegmentes (2, 2', 2") umgebend, eine Drainagematte bzw. -platte (29) angeordnet ist.

2. Pflanzsäule (0) nach Anspruch 1, wobei das Bodenstück (1) und das Zwischenstück (3) wannenartig ausgebildet sind und jeweils mit einem Steigrohrstutzen (12, 31) und einem Entwässerungsrohrstutzen (13, 32) ausgestattet sind, wodurch eine einfache Verbindung mit dem Steigrohr (4) und dem Entwässerungsrohr (5), welche die Säulensegmente (2, 2') queren, ausbildbar ist.

3. Pflanzsäule (0) nach einem der vorhergehenden Ansprüche, wobei Mittel im Innenraum des Säulensegmentes (2, 2') angeordnet sind, welche das Steigrohr (4) und das Entwässerungsrohr (5) an der Wand (20) des Säulensegmentes (2, 2') fixieren.

4. Pflanzsäule (0) nach einem der vorhergehenden Ansprüche, wobei an der Wand (20) des Säulensegmentes (2, 2') elektrische Versorgungsleitungen und/oder ein Beleuchtungsmodul durch eine Klebeverbindung oder beispielsweise eine Schelle (25, 26) verschraubt befestigt sind.

5. Pflanzsäule (0) nach einem der vorhergehenden Ansprüche, wobei im Innenraum des Säulensegmentes (2), dem benachbarten Zwischenstück (3) oder Bodenstück (1) gegenüberliegend ein Lochblech (14) das Steigrohr (4) und das Entwässerungsrohr (5) durchlassend und den Innenraum des Säulensegmentes (2) abschliessend, angeordnet ist.

6. Pflanzsäule (0) nach einem der vorhergehenden Ansprüche, wobei das Säulensegment (2, 2', 2") mindestens eine Serviceöffnung (23) dem Bodenstück (1) zugewandten Ende oder dem benachbarten Säulensegment (2, 2', 2") zugewandten Ende aufweist.

7. Pflanzsäule (0) nach einem der vorhergehenden Ansprüche, wobei das Säulensegment (2, 2', 2") mindestens eine Entwässerungsaussparung (24) an dem Bodenstück (1) zugewandten Ende aufweist.

8. Pflanzsäule (0) nach einem der vorhergehenden Ansprüche, wobei in der Bodenplatte (10) des Bodenstücks (1) Bohrlöcher (102) angeordnet sind, durch welche das Bodenstück (1) mittels Befestigungsmitteln (103) am Boden (B) befestigbar ist.

9. Pflanzsäule (0) nach einem der vorhergehenden Ansprüche, wobei, eine Drainagematte bzw. -platte (29) auf der Bodenplatte (10) des wannenartig ausgestalteten Bodenstücks (1) und/oder auf der dem benachbarten Säulensegment (2) zugewandten Boden der Stahlwanne (33) des Zwischenstückes (3) angeordnet ist.

10. Pflanzsäule (0) nach einem der vorhergehenden Ansprüche, wobei, die Drainagematte bzw. -platte (29) aus Geokunststoff, insbesondere aus einem Polyamidgewebe hergestellt ist, welches mit Klammern an den Säulensegmenten (2) und/oder am Zwischenstück (3) und/oder dem Bodenstück (1) befestigt ist.

## Claims

1. A plant column (0) having at least one tubular column segment (2) with a wall (20), comprising a plurality of plant openings (21),
each column segment (2) being terminated in a watertight manner in that the column segment (2) closest to the ground is fastened on one side to a ground piece (1) and can be fastened to the ground (B) by means of the ground piece (1), and between column segments (2, 2') which are adjacent in the longitudinal direction (L) there is at least one intermediate piece (3) for fastening adjacent column segments (2, 2') in a watertight manner,
and the column segments (2, 2'), the ground piece (1) and the intermediate piece (3) being connectable by being fitted together such that a standpipe (4) and a drainage pipe (5) can be arranged running in the longitudinal direction (L) through the entire plant column (0) to supply and drain water, each column segment (2, 2') comprising its own water circuit,
**characterised in that**
a drainage mat or drainage plate (29) surrounds the outer face of the column segment (2, 2', 2").

2. The plant column (0) according to Claim 1, wherein the ground piece (1) and the intermediate piece (3) are tub-shaped and are each provided with a standpipe neck (12, 31) and a drainage pipe neck (13, 32), forming a simple connection to the standpipe (4) and the drainage pipe (5) which cross the column segments (2, 2').

3. The plant column (0) according to any one of the preceding claims, wherein means which fix the standpipe (4) and the drainage pipe (5) to the wall (20) of the column segment (2, 2') are arranged in the interior of the column segment (2, 2').

4. The plant column (0) according to any one of the preceding claims, wherein electrical supply cables and/or a lighting module are fastened by an adhesive connection or for example screw-fastened by a clip (25, 26) to the wall (20) of the column segment (2, 2').

5. The plant column (0) according to any one of the preceding claims, wherein a perforated plate (14) is arranged in the interior of the column segment (2) opposite the adjacent intermediate piece (3) or ground piece (1) so as to allow the standpipe (4) and the drainage pipe (5) through and to terminate the interior of the column segment (2).

6. The plant column (0) according to any one of the preceding claims, wherein the column segment (2, 2', 2") has at least one servicing opening (23) on the end facing the ground piece (1) or on the end facing the adjacent column segment (2, 2', 2").

7. The plant column (0) according to any one of the preceding claims, wherein the column segment (2, 2', 2") has at least one drainage cut-out (24) on the end facing the ground piece (1).

8. The plant column (0) according to any one of the preceding claims, wherein drilled holes (102) are provided in the baseplate (10) of the ground piece (1), through which the ground piece (1) can be fastened to the ground (B) by means of fastening means (103).

9. The plant column (0) according to any one of the preceding claims, wherein a drainage mat or drainage plate (29) is arranged on the baseplate (10) of the tub-shaped ground piece (1) and/or on the base, facing the adjacent column segment (2), of the steel tub (33) of the intermediate piece (3) .

10. The plant column (0) according to any one of the preceding claims, wherein the drainage mat or drainage plate (29) is produced from geosynthetic material, in particular from a woven polyamide fabric, which is stapled to the column segments (2) and/or to the intermediate piece (3) and/or to the ground piece (1).

## Revendications

1. Colonne végétale (0) pourvue d'au moins segment de colonne (2) de forme tubulaire, doté d'une paroi (20), comprenant une pluralité d'ouvertures pour des plantes (21), chaque segment de colonne (2) étant fermé de manière étanche à l'eau en ce que le segment de colonne (2) le plus proche du fond inférieur est fixé par un côté sur une pièce de fond inférieur (1) et est susceptible d'être fixé sur le fond inférieur (B) au moyen de la pièce de fond inférieur (1) et en ce qu'entre des segments de colonne (2, 2') voisins dans la direction longitudinale (L) est placée au moins une pièce intermédiaire (3) destinée à la fixation de segments de colonne (2, 2') voisins,
et les segments de colonne (2, 2'), la pièce de fond inférieur (1) et la pièce intermédiaire (3) étant susceptibles d'être reliés par emboîtement, de telle sorte qu'un tube montant (4) et un tube de drainage (5) soient susceptibles d'être placés en étant réalisés en s'écoulant à travers l'ensemble de la colonne végétale (0) dans la direction longitudinale (L) pour amener et évacuer de l'eau, chaque segment de colonne (2, 2') comprenant un circuit d'eau, **caractérisée en ce qu'**une natte ou plaque de drainage (29) est placée en entourant la surface extérieure du segment de colonne (2, 2', 2").

2. Colonne végétale (0) selon la revendication 1, la pièce de fond inférieur (1) et la pièce intermédiaire (3) étant conçues en forme de cuves et étant équipées chacune d'une tubulure de tube montant (12, 31) et d'une tubulure de tube de drainage (13, 32), suite à quoi un assemblage facile avec le tube montant (4) et avec le tube de drainage (5), lesquels croisent les segments de colonne (2, 2') est réalisable.

3. Colonne végétale (0) selon l'une quelconque des revendications précédentes, des moyens étant placés à l'intérieur du segment de colonne (2, 2') lesquels fixent le tube montant (4) et le tube de drainage (5) sur la paroi (20) du segment de colonne (2, 2').

4. Colonne végétale (0) selon l'une quelconque des revendications précédentes, des lignes d'alimentation électrique et/ou un module d'éclairage étant fixé(e)s sur la paroi (20) du segment de colonne (2, 2') par assemblage adhésif ou par exemple un collier (25, 26) étant vissé.

5. Colonne végétale (0) selon l'une quelconque des revendications précédentes, dans l'espace intérieur du segment de colonne (2), à l'opposée de la pièce intermédiaire (3) ou pièce de fond inférieur (1) voisine étant placée une tôle perforée (14) laissant passer le tube montant (4) et le tube de drainage (5) et fermant l'espace intérieur du segment de colonne (2).

6. Colonne végétale (0) selon l'une quelconque des revendications précédentes, le segment de colonne (2, 2', 2") comportant au moins un regard (23) sur l'extrémité faisant face à la pièce de fond inférieur (1) ou sur l'extrémité faisant face au segment de colonne (2, 2', 2") voisin.

7. Colonne végétale (0) selon l'une quelconque des revendications précédentes, le segment de colonne (2, 2', 2") comportant sur l'extrémité faisant face à la pièce de fond inférieur (1) un évidement de drainage (24).

8. Colonne végétale (0) selon l'une quelconque des revendications précédentes, dans la plaque de fond inférieur (10) de la pièce de fond inférieur (1) étant placés des alésages (102), par lesquels la pièce de fond inférieur (1) est susceptible d'être fixée à l'aide de moyens de fixation (103) sur le fond inférieur (B).

9. Colonne végétale (0) selon l'une quelconque des revendications précédentes, une natte ou plaque de drainage (29) étant placée sur la plaque de fond inférieur (10) de la pièce de fond (1) inférieur conçue en forme de cuve et/ou sur le fond inférieur de la cuve en acier (33) de la pièce intermédiaire (3) faisant face au segment de colonne (2) voisin.

10. Colonne végétale (0) selon l'une quelconque des revendications précédentes, la natte ou plaque de drainage (29) étant fabriquée en géosynthétique, notamment en un tissu polyamide, lequel est fixé avec des agrafes sur les segments de colonne (2) et/ou sur la pièce intermédiaire (3) et/ou sur la pièce de fond inférieur (1).
